# FASCICULE DE BREVET EUROPEEN

(11) **EP 2 060 746 B1**
(45) Date de publication et mention de la délivrance du brevet: **09.03.2011**
(21) Numéro de dépôt: 08168236.1
(22) Date de dépôt: 04.11.2008
(51) Int. Cl.: F01D 17/14, F02K 3/075, F04D 27/02, F02C 9/18

(54) **Vanne de décharge dans une turbomachine**
Ablassventil in einem Turbotriebwerk
Discharge valve in a turbomachine

(30) Priorité: 13.11.2007 FR 0707944
(43) Date de publication de la demande: 20.05.2009
(73) Titulaire: SNECMA, 75015 Paris (FR)
(72) Inventeur: Comin, François, Jean, 77000, Melun (FR); Majeux, Claude, Marcel, Robert, 91400, Saclay (FR)
(74) Mandataire: Ramey, Daniel

(56) Documents cités:
- EP-A- 0 902 179
- EP-A- 1 398 464
- EP-A- 1 486 678
- FR-A- 2 664 018

## Description

La présente invention concerne une vanne de décharge dans une turbomachine telle qu'un turboréacteur ou un turbopropulseur d'avion.

La demande EP-A-1 398 464 décrit une vanne de décharge de turbomachine.

La demande EP-A-1 486 678 décrit un compresseur avec un passage secondaire de refoulement d'air.

Des vannes de décharge sont en général montées sur le carter intermédiaire de la turbomachine, entre le compresseur basse-pression et le compresseur haute-pression, dans un espace annulaire s'étendant entre la veine d'écoulement du flux primaire et la veine d'écoulement du flux secondaire.

Ces vannes de décharge sont régulièrement réparties autour de l'axe longitudinal de la turbomachine et comprennent chacune une porte déplaçable par rapport au carter intermédiaire, entre une position d'obturation d'un orifice de passage d'air formé dans le carter intermédiaire et une position d'ouverture de cet orifice. L'ouverture de ces portes permet d'évacuer une partie de l'air du flux primaire dans certaines conditions de fonctionnement de la turbomachine, cet air étant réinjecté dans le flux secondaire ou alimentant des systèmes de refroidissement ou de ventilation de composants de la turbomachine.

Dans certaines réalisations, les portes des vannes de décharge ont une forme sensiblement parallélépipédique et les orifices correspondants du carter intermédiaire ont une forme sensiblement complémentaire de celle des portes. Un joint d'étanchéité en élastomère ayant une forme généralement en U s'étend le long des bords périphériques latéraux et aval de chaque porte et est destiné à coopérer avec une partie correspondante du bord de l'orifice du carter intermédiaire pour assurer l'étanchéité autour de la porte dans sa position de fermeture de cet orifice.

Dans la technique actuelle, ce joint est fixé sur la porte au moyen d'une plaque en U qui est rapportée sur le joint et qui est fixée sur la porte par des rivets traversant le joint. Le joint est ainsi maintenu serré sur le bord périphérique de la porte. La porte et la plaque sont en général réalisées en matériau métallique, par exemple en aluminium.

Chaque porte comprend des moyens de pivotement formés par des pattes qui s'étendent depuis une partie d'extrémité amont de la porte radialement vers l'extérieur. Ces pattes comprennent à leurs extrémités radialement internes des alésages cylindriques coaxiaux de montage de paliers de centrage et de guidage d'un premier pivot porté par le carter intermédiaire, et définissant l'axe de pivotement de la porte. Ces pattes comprennent en outre à leurs extrémités radialement externes des alésages cylindriques coaxiaux de montage de paliers dans lesquels est engagé un second pivot monté à l'extrémité d'une biellette qui commande le pivotement de la porte autour du premier pivot. Les paliers montés dans les alésages des pattes sont en général réalisés en acier ou en polymère.

Cette vanne de décharge comprend donc un nombre relativement important de composants (vingt cinq au total dans un cas particulier de réalisation : une porte, quatre douilles de palier, un joint, une plaque de fixation du joint, neuf rivets, et neuf entretoises), ce qui se traduit par une masse et un coût relativement importants, la fabrication et l'assemblage de ces différentes pièces étant relativement long.

L'invention permet d'éviter ces inconvénients de façon simple, efficace et économique.

Elle propose à cet effet une vanne de décharge d'une turbomachine, comprenant une porte destinée à être montée pivotante autour d'un axe entre une position d'obturation d'un orifice de passage d'air et une position d'ouverture de cet orifice, un joint d'étanchéité s'étendant le long d'au moins une partie du bord périphérique de la porte, et des moyens de fixation du joint sur le bord périphérique de la porte, caractérisée en ce que la porte et les moyens de fixation du joint sont réalisés en matériau plastique et formés d'une seule pièce ou rendus solidaires l'un de l'autre par soudage ou collage.

Selon l'invention, la porte et les moyens de fixation du joint sur la porte sont réalisés en matériau plastique, ce qui permet de réduire notablement la masse de la vanne de décharge. De façon simple, la porte et les moyens de fixation peuvent être réalisés d'une seule et même pièce. En variante, la porte et les moyens de fixation sont rendus solidaires l'un de l'autre par soudage, par exemple par ultrasons, ou par collage de leurs matériaux entre eux.

Dans ces deux modes de réalisation de l'invention, la porte et les moyens de fixation forment un élément monobloc qui assure la fixation du joint sur la porte sans avoir recours à des moyens supplémentaires de fixation du type rivets ou analogues.

La réalisation de la porte et des moyens de fixation en matériau plastique approprié présente un autre avantage: les surfaces cylindriques internes des alésages des pattes de la vanne forment les moyens de centrage et de guidage du premier et du second pivots précités, ce qui évite les douilles de centrage et de guidage de ces pivots. Lorsque les pattes sont formées d'une seule pièce avec la porte et les moyens de fixation du joint, la vanne selon l'invention comprend alors seulement deux composants (la porte et le joint) contre vingt cinq dans la technique antérieure.

La porte et/ou les moyens de fixation du joint peuvent être réalisés en matériau thermoplastique renforcé ou non de fibres telles que des fibres de verre. Le matériau thermoplastique est par exemple du type PEEK (polyétheréthercétone) ou ULTEM ® (polyétherimide).

La porte et/ou les moyens de fixation peuvent être réalisés par moulage par injection.

Selon un mode de réalisation de l'invention, le joint est surmoulé sur la porte.

En variante, le joint comporte des orifices traversés par des plots d'une plaque de fixation, ces plots étant rendus solidaires de la porte par collage ou soudage de leurs extrémités libres sur la porte.

La plaque de fixation comporte de préférence un rebord qui s'étend le long d'un bord périphérique du joint et qui est rendu solidaire de cette porte par soudage ou collage.

La plaque de fixation a par exemple une forme générale en U et une section sensiblement en S.

L'invention concerne également une turbomachine, telle qu'un turboréacteur ou un turbopropulseur d'avion, caractérisée en ce qu'elle comprend au moins une vanne de décharge telle que décrite ci-dessus.

L'invention sera mieux comprise et d'autres caractéristiques, détails et avantages de la présente invention apparaîtront plus clairement à la lecture de la description suivante faite à titre d'exemple non limitatif et en référence aux dessins annexés, dans lesquels :
- la figure 1 est une vue schématique en coupe d'une vanne de décharge de turbomachine, selon la technique antérieure,
- la figure 2 est une vue en perspective de la vanne de décharge de la figure 1,
- la figure 3 est une vue schématique en coupe d'une vanne de décharge de turbomachine, selon l'invention,
- la figure 4 est une vue à plus grande échelle du détail I₄ de la figure 3,
- la figure 5 est une vue correspondant à la figure 4 et représente une variante de réalisation de l'invention,
- la figure 6 est une vue schématique en perspective du joint d'étanchéité et des moyens de fixation de ce joint de la variante de réalisation de la figure 5.

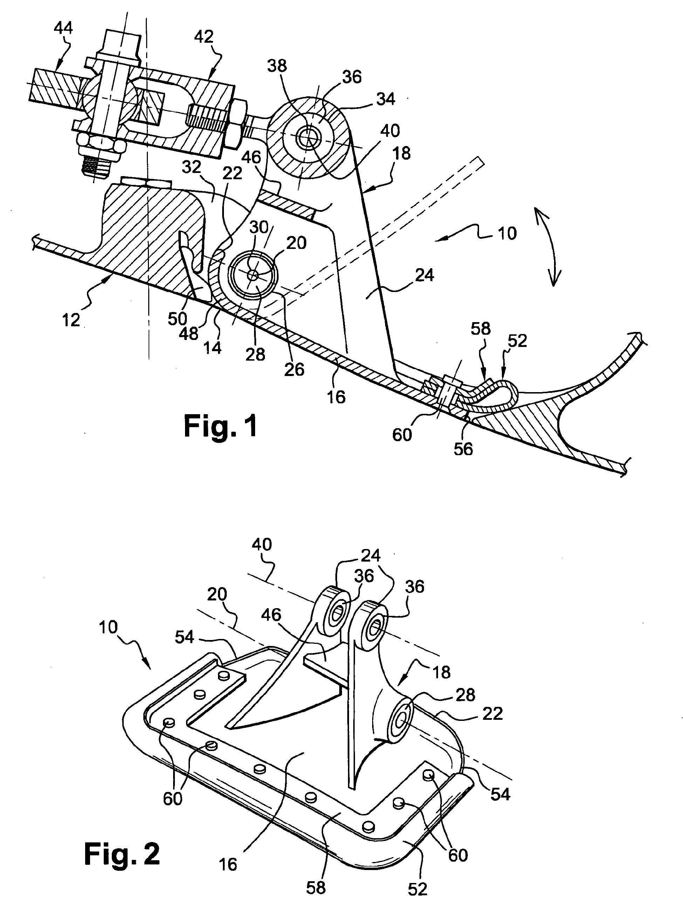

On se réfère d'abord aux figures 1 et 2 qui représentent une vanne de décharge 10 d'une turbomachine, telle qu'un turboréacteur ou un turbopropulseur d'avion, selon la technique antérieure.

Cette vanne de décharge 10 est montée sur un carter intermédiaire 12 de la turbomachine qui est agencé entre un compresseur basse-pression, situé en amont, et un compresseur haute-pression, situé en aval, ces compresseurs n'étant pas représentés dans les dessins.

Le carter intermédiaire 12 dont une partie seulement est visible en figure 1 a une forme générale cylindrique ou tronconique et délimite intérieurement la veine d'écoulement du flux primaire de la turbomachine.

Ce carter 12 comprend des orifices 14 de forme sensiblement parallélépipédique qui sont chacun associé à une vanne de décharge 10. Le carter 12 comprend par exemple douze orifices 14 régulièrement répartis autour de l'axe longitudinal de la turbomachine et est donc équipé de douze vannes de décharge 10.

Chaque vanne de décharge 10 comprend une porte 16 qui a une forme sensiblement parallélépipédique complémentaire de celle d'un orifice 14 correspondant du carter pour l'obturation de cet orifice. La vanne 10 comprend en outre des moyens 18 de pivotement de cette porte autour d'un axe transversal 20 qui est sensiblement tangent au carter intermédiaire 12 et qui s'étend le long du bord périphérique amont 22 de la porte, à l'extérieur de cette dernière. La porte 16 est déplaçable en pivotement par rapport au carter 12 entre une position de fermeture de l'orifice 14 du carter (représentée traits continus en figure 1), dans laquelle la surface intérieure de la porte 16 est alignée avec celle du carter intermédiaire 12, et une position d'ouverture de cet orifice (représentée en traits pointillés), dans laquelle la porte est inclinée de 60° environ vers l'extérieur par rapport à sa position fermée.

Les moyens 18 de pivotement de la porte 16 comprennent deux pattes 24 qui sont formées d'une seule pièce avec la porte et qui s'étendent sensiblement radialement vers l'extérieur depuis la surface extérieure de la porte.

Les pattes 24 sont sensiblement symétriques par rapport à un plan passant par l'axe longitudinal de la turbomachine et entre les deux pattes 24, ce plan correspondant sensiblement au plan de coupe du dessin de la figure 1.

Chacune de ces pattes 24 comprend à son extrémité radialement interne un alésage cylindrique 26 qui s'étend coaxialement à l'axe 20 de pivotement de la porte 16 et qui reçoit une douille 28 formant pallier. L'axe 20 de pivotement de la porte est défini par un pivot cylindrique 30 qui est engagé dans les douilles 28 des pattes 24 de la vanne, et qui est fixé par des moyens 32 appropriés, à chacune de ces extrémités, sur le carter intermédiaire 12.

Chaque patte 24 comprend également à son extrémité radialement externe un alésage cylindrique 34 de montage d'une autre douille 36 formant pallier, les douilles 36 étant alignées coaxialement entre elles et recevant un second pivot 38. Ce second pivot 38 définit un axe 40 sensiblement parallèle à l'axe 20 de pivotement de la porte 16 et est monté à une extrémité d'au moins une biellette 42 dont l'autre extrémité est reliée par une liaison rotulante à un moyen 44 approprié de commande du déplacement axial vers l'amont ou vers l'aval de la biellette.

La biellette 42 est représentée en figure 1 dans sa position axiale aval maximale, qui correspond à la position de fermeture de la porte 16, et est déplaçable jusqu'à une position amont pour laquelle la porte est dans sa position ouverte représentée en traits pointillés en figure 1.

Les pattes 24 sont en outre reliées entre elles par une paroi transversale 46 qui s'étend entre les pattes, sensiblement à mi-hauteur de celles-ci.

La partie d'extrémité amont 48 de la porte est recourbée vers l'extérieur, et son rayon de courbure est centré sur l'axe 20 de pivotement de la porte 16. Cette partie d'extrémité 48 présente une surface cylindrique externe qui coopère à étanchéité avec un joint 50 fixé sur le carter intermédiaire 12, lors du pivotement de la porte. Ce joint 50 s'étend le long du bord amont de l'orifice 14 du carter 12.

Dans la position de fermeture représentée en traits continus en figure 1, la porte 16 coopère également à étanchéité avec le bord de l'orifice 14 du carter 12 au moyen d'un autre joint 52 de forme générale en U qui s'étend le long des bords périphériques latéraux 54 et aval 56 de la porte.

Ce joint 52 comprend une partie plane qui s'étend au dessus des bords périphériques 54, 56 de la porte et qui est maintenue serrée sur cette porte par une plaque de fixation 58, et un bourrelet ou une partie bombée qui s'étend autour des bords 54, 56 de la porte, à l'extérieur de ceux-ci, et qui est en appui sur les bords latéraux et aval correspondants de l'orifice 14 du carter, dans la position de fermeture de la porte 16 (figure 1).

La plaque 58 de fixation du joint 52 a une forme générale en U et s'étend sur la partie plane du joint 52. Elle est fixée sur la porte 16 au moyen de plusieurs rivets 60 qui s'étendent à travers des orifices correspondants de la plaque, de la porte 16, et du joint.

La vanne de décharge 10 de la technique antérieure est ainsi composée de plusieurs composants (vingt cinq au total dans le cas particulier représenté : une porte 16, quatre douilles 18, 36, un joint 52, une plaque 58 de fixation du joint, neuf rivets 60, et neuf entretoises non visibles) qui sont réalisées dans des matériaux différents. Cette vanne est lourde et son assemblage est long et complexe.

L'invention permet de remédier à ce problème en réalisant la porte et les moyens de fixation du joint en matériau plastique, ce qui permet en outre d'apporter de nombreux autres avantages décrits plus haut.

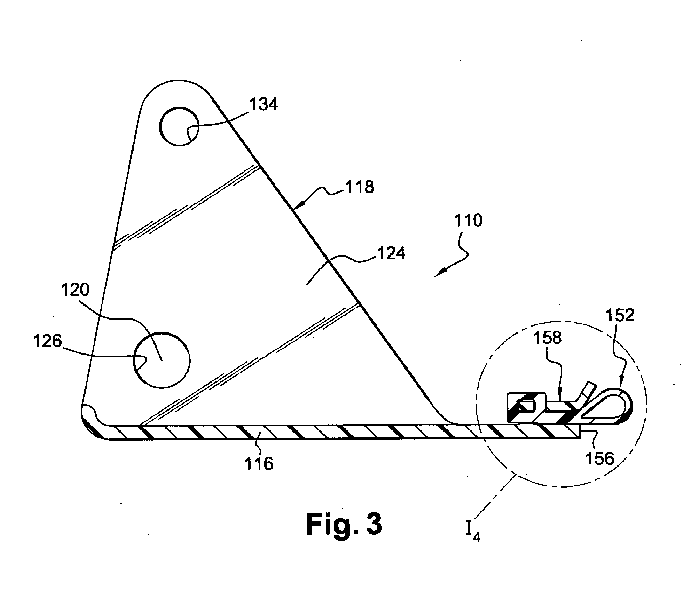

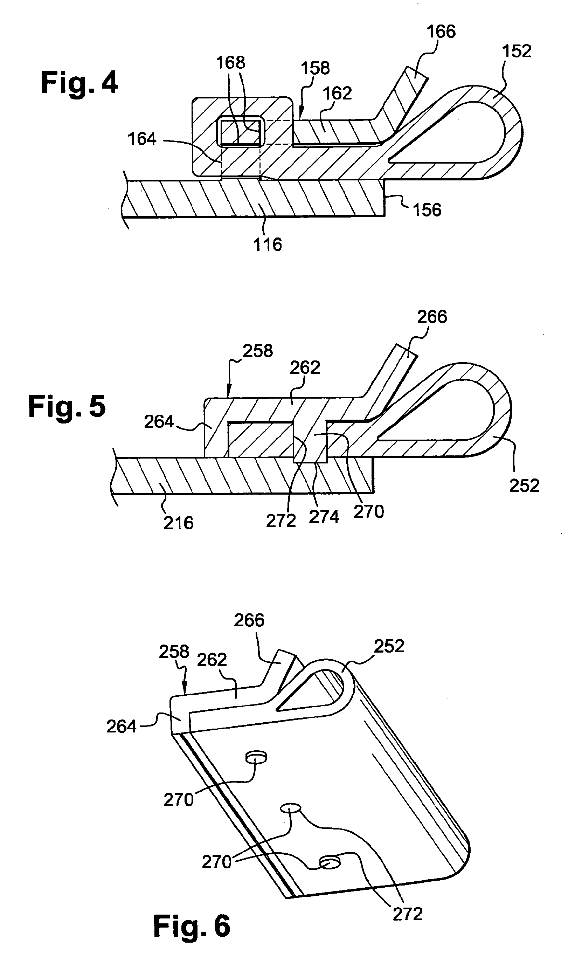

Dans l'exemple de réalisation représenté aux figures 3 et 4, la porte 116 et la plaque 158 de fixation du joint 152 sont formées d'une seule pièce et sont donc réalisées dans le même matériau plastique.

La porte 116 et la plaque 158 peuvent être obtenues par moulage par injection d'un matériau plastique approprié, tel qu'un matériau thermoplastique, par exemple du type PEEK (polyétheréthercétone) ou ULMET® (polyétherimide). Le matériau de la porte et de la plaque peut également être renforcé de fibres telles que des fibres de verre.

Comme dans la technique antérieure, la plaque 158 a une forme générale en U. Elle a en outre ici en section une forme sensiblement en S, et comprend une paroi intermédiaire 162 qui s'étend parallèlement aux bords périphériques 154, 156 de la porte, au dessus de ceux-ci. Cette paroi intermédiaire 162 est reliée à son extrémité située du côté opposé aux bords périphériques 154, 156 à l'extrémité radialement externe d'un rebord 164 sensiblement radial par rapport à l'axe de la turbomachine, l'extrémité radialement interne de ce rebord 164 étant raccordée à la porte 116. La paroi intermédiaire 162 est également reliée à son autre extrémité, située du côté des bords périphériques 154, 156 de la porte, à une paroi inclinée 166 qui s'étend en aval vers l'extérieur.

La paroi intermédiaire 162 et le rebord radial 164 de la plaque comprennent des orifices 168 de passage et d'ancrage du joint 152 qui est directement surmoulé entre la plaque 158 et les bords périphériques latéraux et aval de la porte. Lors du surmoulage du joint, de la matière de ce joint 152 passe à travers les orifices 168 de la plaque et recouvre une partie de cette plaque, par exemple la zone de liaison entre la paroi intermédiaire 162 et le rebord radial 164 de la plaque située entre les orifices 168, comme cela est visible en figure 4.

Dans la variante de réalisation des figures 5 et 6, la plaque 258 et la porte 216 sont formées indépendamment l'une de l'autre, la plaque étant rapportée et fixée sur la porte pour emprisonner le joint 252 qui est sensiblement identique à celui de la technique antérieure.

La plaque 258 peut être formée dans un matériau plastique identique ou différent de celui de la porte. Le matériau de la porte et/ou de la plaque peut être l'un de ceux décrits plus haut en référence aux figures 3 et 4.

La plaque 258 a une forme comparable en section à celle de la plaque 158 des figures 3 et 4, et comprend une paroi inclinée ou oblique 266 reliée par une paroi intermédiaire 262 à un rebord radial 264.

Le rebord radial 264 de la plaque est en appui à son extrémité libre radialement interne sur la surface extérieure de la porte. La plaque est rendue solidaire de la porte par collage de la plaque sur la porte, au niveau de cette zone d'appui ou de contact.

La plaque comprend en outre des plots 270 formés d'une seule pièce avec la plaque, ces plots 270 traversant des orifices 272 correspondants du joint 252 et étant également rendus solidaires de la porte par collage de leurs extrémités libres sur la porte 216.

Les plots 270 s'étendent depuis la surface interne de la paroi intermédiaire 262 de la plaque vers la porte 216, et ont une hauteur qui est légèrement supérieure à l'épaisseur de la partie plane du joint 252, de sorte que les extrémités libres de ces plots dépassent des joints lorsqu'ils sont engagés dans les orifices 272 de ce joint (figure 6). La porte 216 comprend sur sa surface externe une série de trous borgnes 274 dont le diamètre et la profondeur sont déterminés en fonction du diamètre des plots 270 et de la hauteur des extrémités des plots qui dépassent du joint. Lors du montage de la plaque 258 et du joint 252 sur la porte, les plots 270 de la plaque sont engagés dans les orifices 272 du joint (figure 6) puis les extrémités libres des plots sont engagées dans les trous borgnes 274 de la porte de façon à définir une position correcte de montage du joint et de la plaque sur le bord périphérique de la porte.

Afin de coller les extrémités libres des plots 270 au fond des trous borgnes 274, de la colle est préalablement disposée dans les trous 274 ou sur les extrémités libres des plots.

En variante, le rebord radial 264 et les extrémités libres des plots 270 de la plaque 258 sont soudées à la porte 216 de la vanne de décharge. Le soudage est par exemple réalisé au moyen d'ondes ultrasonores transmises au niveau des zones de contact précitées à travers le matériau de la porte et/ou de la plaque.

Le nombre de plots 274 de la plaque est par exemple identique au nombre de rivets 60 utilisés dans la technique antérieure (neuf en figure 2), ces plots étant régulièrement répartis le long des bords périphériques amont et latéraux de la porte.

Lorsque la porte 116, 216 et la plaque 158, 258 de la vanne de décharge sont réalisés dans un matériau plastique approprié tels que ceux décrits plus haut, il n'est pas nécessaire de prévoir des douilles de centrage et de guidage des pivots 30, 38, comme c'est le cas dans la technique antérieure.

En effet, les alésages 126, 134 radialement internes et externes prévus sur les pattes 124 de la vanne pour le passage des pivots 30, 38 peuvent présenter chacun une surface cylindrique destinée à centrer et à guider directement un pivot. Dans ce cas, chaque patte comprend deux alésages, radialement interne et externe, respectivement, comportant des surfaces cylindriques internes de centrage et de guidage des pivots 30, 38, chaque alésage ayant un diamètre qui est déterminé pour que le pivot correspondant soit monté ajusté dans cette orifice.

Dans ce cas, la vanne de décharge de l'exemple de réalisation des figures 3 et 4 comprend seulement deux pièces (le joint 152 et la porte 116 formée d'une seule pièce avec la plaque 158 de fixation du joint - figure 3), et la vanne de décharge de la variante de réalisation des figures 5 et 6 comprend trois pièces (le joint 252, la plaque 258 et la porte 216).

## Revendications

1. Vanne de décharge dans une turbomachine, comprenant une porte (116, 216) destinée à être montée pivotante autour d'un axe (120) entre une position d'obturation d'un orifice (14) de passage d'air et une position d'ouverture de cet orifice, un joint d'étanchéité (152, 252) s'étendant le long d'au moins une partie du bord périphérique de la porte, et des moyens (158, 258) de fixation du joint sur le bord périphérique de la porte, **caractérisée en ce que** la porte et les moyens de fixation du joint sont réalisés en matériau plastique et sont formés d'une seule pièce ou sont rendus solidaires par soudage ou collage.

2. Vanne de décharge selon la revendication 1, **caractérisée en ce que** la porte (116, 216) et/ou les moyens de fixation (158, 258) sont réalisés en matériau thermoplastique renforcé de fibres, telles que des fibres de verre.

3. Vanne de décharge selon la revendication 1 ou 2, **caractérisée en ce que** la porte (116, 216) et/ou les moyens de fixation (158, 258) sont réalisés par moulage par injection.

4. Vanne de décharge selon l'une des revendications précédentes, **caractérisée en ce que** le joint (152) est surmoulé sur la porte (116).

5. Vanne de décharge selon l'une des revendications 1 à 3, **caractérisée en ce que** le joint (252) comporte des orifices traversés par des plots (270) d'une plaque de fixation (258), ces plots étant rendus solidaires de la porte par collage ou soudage de leurs extrémités libres sur la porte.

6. Vanne de décharge selon la revendication 5, **caractérisée en ce que** la plaque de fixation (258) comporte un rebord (264) qui s'étend le long d'un bord périphérique du joint (252) et qui est rendu solidaire de la porte par soudage ou collage.

7. Vanne de décharge selon l'une des revendications précédentes, **caractérisée en ce que** la porte (216) et les moyens de fixation (152, 258) sont rendus solidaires par soudage par ultrasons.

8. Vanne de décharge selon la revendication 5 ou 6, **caractérisée en ce que** la plaque de fixation (258) a une forme générale en U et une section sensiblement en S.

9. Vanne de décharge selon l'une des revendications précédentes, **caractérisée en ce qu'**elle comprend au moins une patte (124) formée d'une seule pièce avec la porte et comportant au moins un alésage (126, 134) présentant une surface cylindrique interne de centrage et de guidage d'un pivot.

10. Turbomachine, telle qu'un turboréacteur ou un turbopropulseur d'avion, **caractérisée en ce qu'**elle comprend au moins une vanne de décharge selon l'une des revendications précédentes.

## Claims

1. Relief valve in a turbomachine, comprising a gate (116, 216) designed to be mounted so as to pivot about a shaft (120) between a closed position of an orifice (14) for the passage of air and an open position of this orifice, a seal (152, 252) extending along at least a portion of the peripheral edge of the gate, and means (158, 258) for attaching the seal to the peripheral edge of the gate, **characterized in that** the gate and the seal attachment means are made of a plastic and are formed of a single piece or are welded or bonded together.

2. Relief valve according to claim 1, **characterized in that** the gate (116, 216) and/or the attachment means (158, 258) are made of a thermoplastic material that is reinforced with fibres, such as glass fibres.

3. Relief valve according to claim 1 or 2, **characterized in that** the gate (116, 216) and/or the attachment means (158, 258) are made by injection moulding.

4. Relief valve according to any one of preceding claims, **characterized in that** the seal (152) is overmoulded onto the gate (116).

5. Relief valve according to any one of claims 1 to 3, **characterized in that** the seal (252) comprises orifices traversed by mounting posts (270) of an attachment plate (258), these mounting posts being secured to the gate by their free ends being bonded or welded to the gate.

6. Relief valve according to Claim 5, **characterized in that** the attachment plate (258) comprises a rim (264) which extends along a peripheral edge of the seal (252) and which is welded or bonded to the gate.

7. Relief valve according to any one of preceding claims, **characterized in that** the gate (216) and the attachment means (158, 258) are secured by ultrasonic welding.

8. Relief valve according to claim 5 or 6, **characterized in that** the attachment plate (258) is generally U-shaped and have a substantially S-shaped section.

9. Relief valve according to any one of preceding claims, **characterized in that** it comprises at least one lug (124) formed of a single piece with the gate and comprising at least one bore (126, 134) having an inner cylindrical surface for centring and guiding a pivot.

10. Turbomachine such as an aircraft turbojet or turboprop, **characterized in that** it comprises at least one relief valve according to any one of preceding claims.

## Patentansprüche

1. Ablassventil in einer Turbomaschine, bestehend aus einer Klappe (116, 216), die dazu vorgesehen ist, um eine Achse (120) schwenkbar zwischen einer Schließstellung einer Luftdurchlass-Öffnung (14) und einer Öffnungsstellung dieser Öffnung eingebaut zu werden,
aus einer Dichtung (152, 252), die sich entlang mindestens eines Teils der Außenkante der Klappe erstreckt, sowie aus Mitteln (158, 258) zur Befestigung der Dichtung an der Außenkante der Klappe,
**dadurch gekennzeichnet,**
**dass** die Klappe und die Befestigungsmittel der Dichtung aus Kunststoff hergestellt sind und in einem einzigen Stückgebildet sind oder durch Schweißen oder Kleben fest miteinander verbunden sind.

2. Ablassventil nach Anspruch 1,
**dadurch gekennzeichnet,**
**dass** die Klappe (116, 216) und/oder die Befestigungsmittel (158, 258) aus faserverstärktem wie beispielsweise glasfaserverstärktem Thermoplast-Werkstoff hergestellt sind.

3. Ablassventil nach Anspruch 1 oder 2,
**dadurch gekennzeichnet,**
**dass** die Klappe (116, 216) und/oder die Befestigungsmittel (158, 258) durch Spritzformen hergestellt sind.

4. Ablassventil nach einem der vorherigen Ansprüche,
**dadurch gekennzeichnet,**
**dass** die Dichtung (152) an der Klappe (116) aufgeformt ist.

5. Ablassventil nach einem der Ansprüche 1 bis 3,
**dadurch gekennzeichnet,**
**dass** die Dichtung (252) Öffnungen aufweist, durch die sich Stifte (270) einer Befestigungsplatte (258) erstrecken, wobei diese Stifte durch Kleben oder Anschweißen ihrer freien Enden an der Klappe fest mit der Klappe verbunden werden.

6. Ablassventil nach Anspruch 5,
**dadurch gekennzeichnet,**
**dass** die Befestigungsplatte (258) eine umgebogene Kante (264) aufweist, die sich an einer Außenkante der Dichtung (252) entlang erstreckt und durch Schweißen oder Kleben fest mit der Klappe verbunden wird.

7. Ablassventil nach einem der vorherigen Ansprüche,
**dadurch gekennzeichnet,**
**dass** die Klappe (216) und die Befestigungsmittel (258) durch UltraschallSchweißen fest miteinander verbunden werden.

8. Ablassventil nach Anspruch 5 oder 6,
**dadurch gekennzeichnet,**
**dass** die Befestigungsplatte (258) eine allgemeine U-Form und einen im Wesentlichen S-förmigen Querschnitt hat.

9. Ablassventil nach einem der vorherigen Ansprüche,
**dadurch gekennzeichnet,**
**dass** es mindestens ein Plättchen (124) aufweist, das in einem Stück mit der Klappe gebildet ist und mindestens eine Bohrung (126, 134) enthält, die eine zylindrische Innenfläche zur Zentrierung und zur Führung eines Drehzapfens aufweist.

10. Turbomaschine wie beispielsweise ein Turboluftstrahltriebwerk oder Turboprop-Triebwerk,
**dadurch gekennzeichnet,**
**dass** sie mindestens ein Ablassventil nach einem der vorherigen Ansprüche enthält.
